# EUROPEAN PATENT SPECIFICATION

(11) **EP 3 043 494 B1**
(45) Date of publication and mention of the grant of the patent: **09.08.2017**
(21) Application number: 13894726.2
(22) Date of filing: 30.09.2013
(51) Int. Cl.: H04J 14/00, H04B 10/00, H04Q 11/00, H04L 12/28, H04L 12/911

(54) **DATA TRANSMISSION METHOD, DEVICE AND SYSTEM**
DATENÜBERTRAGUNGSVERFAHREN, -VORRICHTUNG UND SYSTEM
PROCÉDÉ, DISPOSITIF ET SYSTÈME DE TRANSMISSION DE DONNÉES

(43) Date of publication of application: 13.07.2016
(73) Proprietor: Huawei Technologies Co., Ltd., Longgang District Shenzhen, Guangdong 518129 (CN)
(72) Inventor: ZHANG, Xiaofeng, Shenzhen Guangdong 518129 (CN); ZHANG, Li, Shenzhen Guangdong 518129 (CN); WU, Guangsheng, Shenzhen Guangdong 518129 (CN)
(74) Representative: Epping - Hermann - Fischer
(86) International application number: PCT/CN2013/084727
(87) International publication number: WO 2015/042959

(56) References cited:
- EP-A1- 1 394 990
- CN-A- 102 158 992
- CN-A- 102 726 005
- CN-A- 102 739 514
- US-A1- 2010 083 330
- US-A1- 2012 275 792
- US-A1- 2013 028 253

## Description

### TECHNICAL FIELD

The present invention relates to network communications technologies, and in particular, to a data transmission method, apparatus, and system.

### BACKGROUND

Hybrid fiber-coaxial (HFC) is an economical and practical integrated digital service broadband network access technology. The HFC generally consists of three parts: an optical fiber trunk, a coaxial cable branch line, and a subscriber distribution network. A central office signal is converted into an optical signal first and transmitted on the trunk, and after the optical signal arrives at a user area, the optical signal is converted into an electrical signal, and after a splitter splits the electrical signal, the electrical signal is sent to a user by using a coaxial cable. A difference between the HFC and an early community antenna television (CATV) coaxial network mainly lies in that: on the trunk, the optical signal is transmitted by using an optical fiber; at a front end, electrical-to-optical conversion needs to be completed; and after the electrical signal enters the user area, optical-to-electrical conversion needs to be completed. The HFC network implements optical-to-electrical signal conversion mainly in two manners: one is an analog manner, that is, radio frequency over glass (RFoG), and the other is conversion in a digital manner, which currently includes technologies such as the Ethernet passive optical network Protocol over Coax (EPoC), the Data Over Cable Service Interface Specification over Ethernet passive optical network (DPoE), an upstream external-physical layer interface (UEPI), and a downstream external-physical layer interface (DEPI).

The Data Over Cable Service Interface Specification (Docsis) is an application standard of the HFC network. In Docsis version 3.1, under the premise that most functions of a Media Access Control (MAC) layer in Docsis version 3.0 are remained, a physical (PHY) layer is modified significantly, and the PHY layer uses an orthogonal frequency division multiple access (OFDMA) modulation scheme. An FDD mode is used between the MAC layer and the PHY layer for uplink and downlink multiplexing. For downlink, a MAC layer uses an OFDM broadcasting mode. The MAC divides a spectrum resource at uplink of a user. The MAC divides an uplink physical resource of the user into a mini-slot or a sub-slot, where each mini-slot or sub-slot occupies a particular quantity of symbols and a particular quantity of sub-carriers. In addition, at uplink of the user, a fixed quantity of profiles are supported, and each cable modem (CM) can support the fixed quantity of profiles, where the profile includes a modulation scheme of a CM in each mini-slot or sub-slot, thereby implementing binary phase shift keying (Binary Phase Shift Keying, BPSK) to 4096 quadrature amplitude modulation (QAM). In addition, there is a scheduling period in the MAC layer, and a resource is divided within each scheduling period. In addition, the MAC layer notifies the PHY layer of a resource assignment status and a profile status, so that the PHY layer can correctly demodulate information sent by the CM.

In a current solution that can adapt to the Docsis 3.1, a modulated cable modem termination system (M-CMTS) separates a downlink CMTS PHY layer from CMTS MAC layer or separates both an uplink CMTS PHY layer and a downlink CMTS PHY layer from CMTS MAC layer and places the uplink CMTS PHY layer and the downlink CMTS PHY layer at different positions, and the CMTS PHY layer is connected to the CMTS MAC layer by using an optical fiber; therefore, costs are low and transmission quality is high. Disadvantages of the M-CMTS lie in that: a DEPI and a UEPI are logic links based on the Layer 2 Tunnel Protocol version 3 (L2TPv3), uplink and downlink transmission between the CMTS PHY layer and the CMTS MAC layer that are separated are performed by using the DEPI and the UEPI that needs to be respectively, scheduled by using the L2TPv3 interface, and first-level scheduling still needs to be performed between a CMTS and a CM. Two-level scheduling is performed on service data, which results in a high transmission delay.

Document EP 1 394 990 A1 discloses a miniMAC implementation of a distributed CMTS in a hybrid fiber/coaxial (HFC) plant. The distributed CMTS comprises at least one network layer, at least one media access layer, and one or more physical layers. The at least one media access layer includes one or more miniMAC layers. The one or more miniMAC layers are remotely located from a remaining part of the at least one media access layer. The at least one network layer, the remaining part of the at least one media access layer, the one or more miniMAC layers, and the one or more physical layers each function as separate modules, enabling each layer to be in separate component locations of the HFC plant, yet having the at least one network layer connected to the remaining part of the at least one media access layer, the at least one media access connected to each one of the one or more miniMAC layers, and each one of the one or more physical layers connected to each of the one or more miniMAC layers. The one or more miniMAC layers are located in close proximity to the one or more physical layers in the HFC plant. The one or more miniMAC layers convert digital bits into packets and maintain timing constraints between the one or more miniMAC layers and the one or more physical layers.

Document US 2010/0083330 A1 discloses a method for use in an RFoG cable network, which calls for allocating upstream bandwidths to CM devices, wherein allocating bandwidths includes selecting a start time and allocating respective timeslots relative to the selected start time to at least one of the requesting CM devices; and further, allocating the same timeslots over multiple selected upstream channels, thereby allocating the same timeslots over multiple selected upstream channels, thereby aligning upstream transmission from the requesting CMs across the selected upstream channels. Several embodiments are disclosed to enable DOCSIS 3.0 type scheduling over an RFoG network.

Document US 2012/0275792 A1 discloses that a headend communications device communicates via a network to downstream network elements, such as cable modems coupled behind optical network units, and allocates and grants timeslots for upstream transmissions from the network elements. The headend communications device has a scheduler for managing and controlling timeslot allocations in a manner avoiding interference, such as optical beat interference or FM carrier collisions. The scheduler identifies two or more cable modems or like customer network elements served by the headend communications device that will cause at least a predetermined intolerable level of interference when allocated overlapping timeslots for upstream transmissions and prevents these two or more cable modems or network elements from being allocated and granted overlapping timeslots.

### SUMMARY

Embodiments of the present invention provide a data transmission method, apparatus, and system, which are used to resolve a problem of a high delay that is caused by two-level scheduling that needs to be performed for transmission of service data in an HFC network. Specific technical solutions provided by the embodiments of the present invention are as follows: According to a first aspect, a data transmission method includes:
determining, by a cable modem termination system physical (CMTS PHY) layer according to uplink resource assignment information configured by a CMTS Media Access Control (CMTS MAC) layer separately for each cable modem CM of multiple CMs, a time slice that needs to be occupied when uplink data sent from a CM connected to the CMTS PHY layer, is forwarded to the CMTS MAC layer, wherein
the CMTS PHY layer is a remote CMTS PHY layer and the CTMS MAC layer is connected to the remote CMTS PHY layer by using an optical fiber; and
forwarding, by the CMTS PHY layer to the CMTS MAC layer on the determined time slice, the received uplink data that is sent, by using the uplink resource assignment information configured by the CMTS MAC layer, by the CM connected to the CMTS PHY layer.

With reference to the first aspect, in a first possible implementation manner, the determining, by a CMTS PHY layer according to uplink resource assignment information of each CM, a time slice that needs to be occupied when uplink data sent by a CM connected to the CMTS PHY layer is forwarded to the CMTS MAC layer includes:
determining, by the CMTS PHY layer, a forwarding order when uplink data sent by each CM is forwarded to the CMTS MAC layer;
determining, according to the uplink resource assignment information configured by the CMTS MAC layer for each CM, a volume of forwarded data when the uplink data sent by each CM is forwarded to the CMTS MAC layer;
determining, by the CMTS PHY layer according to the determined volume of forwarded data, a value of a time slice that is separately occupied when the uplink data sent by each CM is forwarded to the CMTS MAC layer; and determining, by the CMTS PHY layer according to the determined forwarding order and the value of the time slice, the time slice that needs to be occupied when the uplink data sent by the CM connected to the CMTS PHY layer is forwarded to the CMTS MAC layer.

With reference to the first possible implementation manner of the first aspect, in a second possible implementation manner, the determining, by the CMTS PHY layer according to the forwarding order and the value of the time slice, the time slice that needs to be occupied when the uplink data sent by the CM connected to the CMTS PHY layer is forwarded to the CMTS MAC layer includes:
determining, by the CMTS PHY layer, a guard interval when the uplink data sent by each CM is separately forwarded to the CMTS MAC layer; and
determining, by the CMTS PHY layer according to the determined forwarding order,
the value of the time slice, and the guard interval, the time slice that is occupied when the uplink data sent by the CM connected to the CMTS PHY layer is forwarded to the CMTS MAC layer.

With reference to the first possible implementation manner of the first aspect, in a third possible implementation manner, the uplink resource assignment information includes:
a time-frequency resource occupied by the uplink data and a profile identifier (profile ID) used by the uplink data.

With reference to the third possible implementation manner of the first aspect, in a fourth possible implementation manner, the determining, by the CMTS PHY layer, a forwarding order when uplink data sent by each CM is forwarded to the CMTS MAC layer includes:
determining, by the CMTS PHY layer according to a time-frequency resource that is occupied when the uplink data sent by each CM is forwarded to the CMTS MAC layer, the forwarding order when the uplink data sent by each CM is forwarded to the CMTS MAC layer.

With reference to the first possible implementation manner of the first aspect or the second possible implementation manner of the first aspect, in a fifth possible implementation manner, the determining, by the CMTS PHY layer, a forwarding order when uplink data sent by each CM is forwarded to the CMTS MAC layer includes:
determining, by the CMTS PHY layer according to an order in which the uplink resource assignment information configured for each CM is received, the forwarding order when the uplink data sent by each CM is forwarded to the CMTS MAC layer.

With reference to the first aspect, in a sixth possible implementation manner, the receiving, by the CMTS PHY layer, the uplink resource assignment information configured by the CMTS MAC layer separately for each CM includes:
classifying, by the CMTS PHY layer, links between the CMTS PHY layer and the CMTS MAC layer into a management channel and a data channel in advance according to the time slice; and
transmitting, by the CMTS PHY layer by using the management channel, Data Over Cable Service Interface Specification (Docsis) management information including the uplink resource assignment information configured by the CMTS MAC layer separately for each CM.

With reference to the sixth possible implementation manner of the first aspect, in a seventh possible implementation manner, the method further includes:
transmitting, by the CMTS PHY layer, management information of the links between
the CMTS PHY layer and the CMTS MAC layer by using the management channel.

With reference to the sixth possible implementation manner of the first aspect, in an eighth possible implementation manner, the forwarding, by the CMTS PHY layer to the CMTS MAC layer, the received uplink data sent by the CM connected to the CMTS PHY layer includes:
transmitting, by the CMTS PHY layer by using the data channel, service data
including the received uplink data sent by the CM connected to the CMTS PHY layer.

With reference to any one of the first aspect and the first possible implementation manner of the first aspect to the eighth possible implementation manner of the first aspect, in a ninth possible implementation manner, the method further includes:
performing, by the CMTS PHY layer, a ranging process when the CMTS PHY layer is initially connected to the CMTS MAC layer, where a ranging result is used to perform delay compensation for the forwarded uplink data.

According to a second aspect, a cable modem termination system physical (CMTS PHY) layer apparatus includes:
a time slice determining module, configured to determine, according to uplink resource assignment information configured by a CMTS Media Access Control (CMTS MAC) layer separately for each cable modem CM of multiple CMs, a time slice that needs to be occupied when uplink data sent from a CM connected to the CMTS PHY layer, is forwarded to the CMTS MAC layer; and
a sending module, configured to forward, to the CMTS MAC layer on the determined time slice, the received uplink data that is sent, by using the uplink resource assignment information configured by the CMTS MAC layer, by the CM connected to the CMTS PHY layer;
wherein the CMTS PHY layer is configured to demodulate and decode the received uplink data that is sent by the CM using a coaxial cable, to code and modulate the decoded data to convert a coaxial signal into an optical fiber signal, and to send the optical fiber signal to the CMTS MAC layer.

With reference to the second aspect, in a first possible implementation manner, the time slice determining module includes:
an order determining module, configured to determine a forwarding order when uplink data sent by each CM is forwarded to the CMTS MAC layer;
a data volume determining module, configured to determine, according to the uplink resource assignment information configured by the CMTS MAC layer for each CM, a volume of forwarded data when the uplink data sent by each CM is forwarded to the CMTS MAC layer;
a time slice value determining module, configured to determine, according to the determined volume of forwarded data, a value of a time slice that is separately occupied when the uplink data sent by each CM is forwarded to the CMTS MAC layer; and
a time slice mapping module, configured to determine, according to the determined forwarding order and the value of the time slice, the time slice that needs to be occupied when the uplink data sent by the CM connected to the CMTS PHY layer is forwarded to the CMTS MAC layer.

With reference to the first possible implementation manner of the second aspect, in a second possible implementation manner, the time slice mapping module is specifically configured to:
determine a guard interval when the uplink data sent by each CM is separately forwarded to the CMTS MAC layer; and
determine, according to the determined forwarding order, the value of the time slice, and the guard interval, the time slice that is occupied when the uplink data sent by the CM connected to the CMTS PHY layer is forwarded to the CMTS MAC layer.

With reference to the first possible implementation manner of the second aspect, in a third possible implementation manner, the data volume determining module is specifically configured to:
determine, according to a time-frequency resource occupied by the uplink data configured by the CMTS MAC layer for each CM and a profile identifier (profile ID) used by the uplink data, the volume of forwarded data when the uplink data sent by each CM is forwarded to the CMTS MAC layer.

With reference to the third possible implementation manner of the second aspect, in a fourth possible implementation manner, the order determining module is specifically configured to:
determine, according to a time-frequency resource that is occupied when the uplink data sent by each CM is forwarded to the CMTS MAC layer, the forwarding order when the uplink data sent by each CM is forwarded to the CMTS MAC layer.

With reference to the first possible implementation manner of the second aspect or the second possible implementation manner of the second aspect, in a fifth possible implementation manner, the order determining module is specifically configured to:
determine, according to an order in which the uplink resource assignment information configured for each CM is received, the forwarding order when the uplink data sent by each CM is forwarded to the CMTS MAC layer.

With reference to the second aspect, in a sixth possible implementation manner, the apparatus further includes:
a channel classification module, configured to classify, according to the time slice, links between the CMTS PHY layer and the CMTS MAC layer into a management channel and a data channel in advance; and
a Docsis management information transmitting module, configured to transmit, by using the management channel, Data Over Cable Service Interface Specification (Docsis) management information including the uplink resource assignment information configured by the CMTS MAC layer separately for each CM.

With reference to the sixth possible implementation manner of the second aspect, in a seventh possible implementation manner, the apparatus further includes:
a link management information transmitting module, configured to transmit management information of the links between the CMTS PHY layer and the CMTS MAC layer by using the management channel.

With reference to the sixth possible implementation manner of the second aspect, in an eighth possible implementation manner, the apparatus further includes:
a data channel transmitting module, configured to transmit, by using the data channel, service data including the received uplink data sent by the CM connected to the CMTS PHY layer.

With reference to any one of the second aspect and the first possible implementation manner of the second aspect to the eighth possible implementation manner of the second aspect, in a ninth possible implementation manner, the apparatus further includes:
a ranging module, configured to perform a ranging process when the CMTS PHY layer is initially connected to the CMTS MAC layer, where a ranging result is used to perform delay compensation for the forwarded uplink data.

According to a third aspect, a data transmission system is provided, and the system includes:
a cable modem termination system Media Access Control (CMTS MAC) layer apparatus, configured to configure uplink resource assignment information of each cable modem CM of multiple CMs, and send the uplink resource assignment information configured for each CM of the multiple CMs to each cable modem termination system physical (CMTS PHY) layer apparatus; and
the CMTS PHY layer apparatus, configured to determine, according to the uplink resource assignment information configured by the CMTS MAC layer apparatus separately for each CM of the multiple CMs, a time slice that needs to be occupied when uplink data sent from a CM, connected to the CMTS PHY layer apparatus, of the multiple CMs is forwarded to the CMTS MAC layer; and forward, to the CMTS MAC layer on the determined time slice, the received uplink data that is sent, by using the uplink resource assignment information configured by the CMTS MAC layer, by the CM connected to the CMTS PHY layer;
wherein the CMTS PHY layer is configured to demodulate and decode the received uplink data that is sent by the CM using a coaxial cable, to code and modulate the decoded data to convert a coaxial signal into an optical fiber signal, and to send the optical fiber signal to the CMTS MAC layer.

With reference to the third aspect, in a first possible implementation manner, when the CMTS PHY layer apparatus is configured to determine, according to the uplink resource assignment information configured by the CMTS MAC layer apparatus separately for each CM of the multiple CMs, the time slice that needs to be occupied when the uplink data sent by the CM, connected to the CMTS PHY layer apparatus, of the multiple CMs is forwarded to the CMTS MAC layer, the CMTS PHY layer apparatus is specifically configured to:
determine a forwarding order when uplink data sent by each CM is forwarded to the CMTS MAC layer;
determine, according to the uplink resource assignment information configured by the CMTS MAC layer for each CM, a volume of forwarded data when the uplink data sent by each CM is forwarded to the CMTS MAC layer;
determine, according to the determined volume of forwarded data, a value of a time slice that is separately occupied when the uplink data sent by each CM is forwarded to the CMTS MAC layer; and
determine, according to the determined forwarding order and the value of the time slice, the time slice that needs to be occupied when the uplink data sent by the CM connected to the CMTS PHY layer is forwarded to the CMTS MAC layer.

With reference to the first possible implementation manner of the third aspect, in a second possible implementation manner, the determining, by the CMTS PHY layer according to the forwarding order and the value of the time slice, the time slice that is occupied when the uplink data sent by the CM connected to the CMTS PHY layer is forwarded to the CMTS MAC layer includes:
determining, by the CMTS PHY layer, a guard interval when the uplink data sent by each CM is separately forwarded to the CMTS MAC layer; and
determining, by the CMTS PHY layer according to the determined forwarding order, the value of the time slice, and the guard interval, the time slice that is occupied when the uplink data sent by the CM connected to the CMTS PHY layer is forwarded to the CMTS MAC layer.

With reference to the first possible implementation manner of the third aspect, in a third possible implementation manner, the uplink resource assignment information includes:
a time-frequency resource occupied by the uplink data and a profile identifier (profile ID) used by the uplink data.

With reference to the third possible implementation manner of the third aspect, in a fourth possible implementation manner, the determining, by the CMTS PHY layer, a forwarding order when uplink data sent by each CM is forwarded to the CMTS MAC layer includes:
determining, by the CMTS PHY layer according to a time-frequency resource that is occupied when the uplink data sent by each CM is forwarded to the CMTS MAC layer, the forwarding order when the uplink data sent by each CM is forwarded to the CMTS MAC layer.

With reference to the first possible implementation manner of the third aspect or the second possible implementation manner of the third aspect, in a fifth possible implementation manner, the determining, by the CMTS PHY layer, a forwarding order when uplink data sent by each CM is forwarded to the CMTS MAC layer includes:
determining, by the CMTS PHY layer according to an order in which the uplink resource assignment information configured for each CM is received, the forwarding order when the uplink data sent by each CM is forwarded to the CMTS MAC layer.

With reference to the third aspect, in a sixth possible implementation manner, the CMTS MAC layer and the CMTS PHY layer classify links between the CMTS PHY layer and the CMTS MAC layer into a management channel and a data channel in advance according to the time slice; and
the CMTS MAC layer and the CMTS PHY layer transmit, by using the management channel, Data Over Cable Service Interface Specification (Docsis) management information including the uplink resource assignment information configured by the CMTS MAC layer separately for each CM.

With reference to the sixth possible implementation manner of the third aspect, in a seventh possible implementation manner, the CMTS MAC layer and the CMTS PHY layer transmit management information of the links between the CMTS PHY layer and the CMTS MAC layer by using the management channel.

With reference to the sixth possible implementation manner of the third aspect, in an eighth possible implementation manner, the CMTS MAC layer and the CMTS PHY layer transmit, by using the data channel, service data including the uplink data sent by the CM connected to the CMTS PHY layer and received by the CMTS PHY layer.

To sum up, in the embodiments of the present invention, a CMTS PHY layer determines, according to uplink resource assignment information of each CM, a time slice that is occupied when uplink data sent by a CM connected to the CMTS PHY layer is forwarded to a CMTS MAC layer, that is, the CMTS PHY layer determines resource assignment by itself when the uplink data sent by the CM is forwarded to the CMTS MAC layer, and each CMTS PHY layer sends, on a corresponding time slice, the uplink data sent by the CM connected to the CMTS PHY layer. Therefore, the CMTS MAC layer is prevented from scheduling the CMTS PHY layer again when the CMTS PHY layer needs to forward to the CMTS MAC layer the uplink data sent by the CM, and a transmission delay of a service data is reduced and network performance is improved by reducing one time of uplink data scheduling.

### BRIEF DESCRIPTION OF DRAWINGS

FIG. 1 is a schematic structural diagram of a network according to an embodiment of the present invention;
FIG. 2 is a schematic flowchart of a data transmission method according to an embodiment of the present invention;
FIG. 3 is a schematic diagram of assignment of an uplink time-frequency resource according to an embodiment of the present invention;
FIG. 4 is a schematic diagram of channel classification according to an embodiment of the present invention;
FIG. 5 is a schematic flowchart of a data transmission method according to an embodiment of the present invention;
FIG. 6 is a schematic principle diagram of data transmission according to an embodiment of the present invention;
FIG. 7 is a schematic flowchart of network initialization according to an embodiment of the present invention;
FIG. 8 is a schematic flowchart of uplink data sending according to an embodiment of the present invention;
FIG. 9 is a schematic structural diagram of a CMTS PHY layer apparatus according to an embodiment of the present invention;
FIG. 10 is a schematic structural diagram of another CMTS PHY layer apparatus according to an embodiment of the present invention; and
FIG. 11 is a schematic structural diagram of a data transmission system according to an embodiment of the present invention.

### DESCRIPTION OF EMBODIMENTS

In embodiments of the present invention, a CMTS PHY layer determines, according to uplink resource assignment information of each CM, a time slice that is occupied when uplink data sent by a CM connected to the CMTS PHY layer is forwarded to CMTS MAC layer, and each CMTS PHY layer sends, on a corresponding time slice, the uplink data of the CM connected to the CMTS PHY layer. Therefore, the CMTS MAC layer is prevented from scheduling the CMTS PHY layer again when the CMTS PHY layer needs to forward the uplink data of the CM to the CMTS MAC layer, and a delay of uplink data is reduced and network performance is improved by reducing one time of uplink data scheduling.

The following describes embodiments of the present invention in detail with reference to the accompanying drawings.

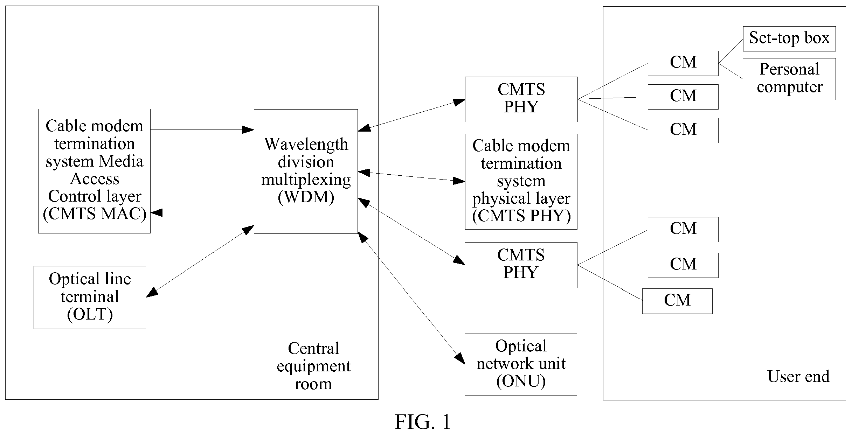

As shown in FIG. 1, FIG. 1 is a schematic structural diagram of a network according to an embodiment of the present invention. In the structure of the network provided by this embodiment of the present invention, CMTS MAC layer is separated completely from a CMTS PHY layer. The CMTS MAC layer is disposed in a central equipment room and is connected to a remote CMTS PHY layer by using an optical fiber. The CMTS PHY layer uses a distributed structure, and each CMTS PHY layer is separately connected to a CM with a particular data volume by using a coaxial cable.

In the structure of the network shown in FIG. 1, downlink data at a user end is broadcast by the CMTS MAC layer to the CMTS PHY layer by using an optical fiber, the CMTS PHY layer performs demodulation and decoding to obtain original downlink data, and then performs coding and modulation to convert the original downlink data into a coaxial signal and sends the coaxial signal to each CM, and then, the CM interacts with a set-top box and/or a personal computer according to the coaxial signal of the CMTS PHY layer. Uplink data at the user end is transmitted by the CM by using the coaxial cable, and demodulation and decoding are performed at the CMTS PHY layer, then coding and modulation are performed to convert the coaxial signal into an optical fiber signal, and then the optical fiber signal is sent to the CMTS MAC layer by the CMTS PHY layer. A Time Division Multiple Access (TDMA) manner is used between the CMTS MAC layer and the CMTS PHY layer.

In addition, in the structure of the network shown in FIG. 1, a passive optical network (PON) is further integrated, where an optical line terminal (OLT) and an optical network unit (ONU) of the PON are connected separately to two ends of an optical fiber line, and the PON and the CMTS share the optical fiber line by means of wavelength division multiplexing (WDM). In a PON system, in a downlink transmission direction from the OLT to the ONU, the OLT broadcasts and sends information continuously to each ONU, and each ONU selects and receives data that belongs to the ONU; and in an uplink transmission direction from the ONU to the OLT, multiple ONUs share an uplink link in a time division multiplexing manner.

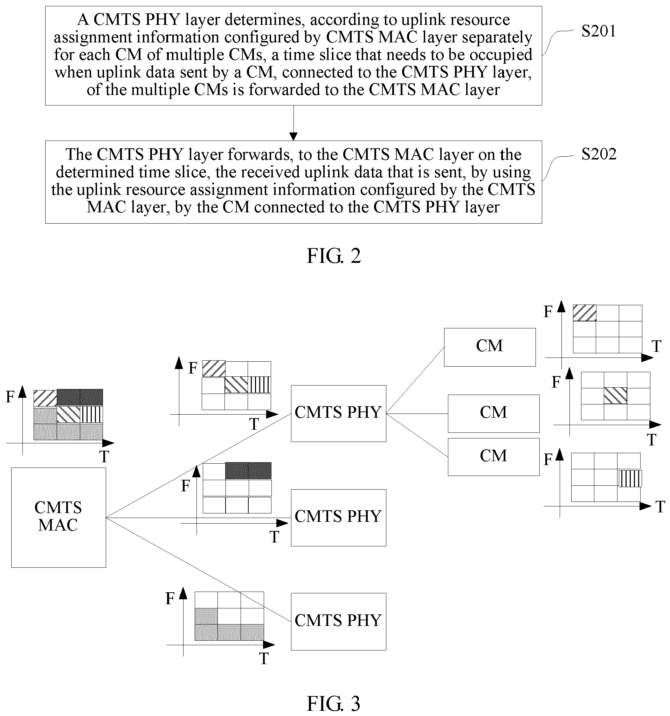

As shown in FIG. 2, a data transmission method provided by an embodiment of the present invention includes:
S201: A CMTS PHY layer determines, according to uplink resource assignment information configured by CMTS MAC layer separately for each CM of multiple CMs, a time slice that needs to be occupied when uplink data sent from a CM, connected to the CMTS PHY layer, of the multiple CMs is forwarded to the CMTS MAC layer.
   As shown in FIG. 3, the CMTS MAC layer configures an uplink resource for each CM and sends the uplink resource assignment information to each CMTS PHY layer by using an optical fiber line. Because a broadcast manner is used at downlink of the optical fiber line, each CMTS PHY layer can receive the uplink resource assignment information of each CM. After receiving the uplink resource assignment information of each CM, the CMTS PHY layer further determines uplink resource assignment information of the CM connected to the CMTS PHY layer, and then notifies the CM connected to the CMTS PHY layer of the corresponding uplink resource assignment information.
   Each CMTS PHY layer determines, according to the received uplink resource assignment information of each CM that is broadcast by the CMTS MAC layer, a time slice that is occupied when uplink data sent by each CM is forwarded to the CMTS MAC layer, so that time slice occupation results of the uplink data of all the CMs that are determined by all the CMTS PHY layers are the same, so as to ensure that no conflict occurs between the time slices used when all the CMTS PHY layers send the uplink data sent by the CMs.
   Specifically, the CMTS PHY layer determines, according to the determined time slice occupation result of the uplink data of each CM, the time slice that is occupied when the uplink data sent by the CM connected to the CMTS PHY layer is forwarded to the CMTS MAC layer.
S202: The CMTS PHY layer forwards, to the CMTS MAC layer on the determined time slice, the received uplink data that is sent, by using the uplink resource assignment information configured by the CMTS MAC layer, by the CM connected to the CMTS PHY layer.

The CM modulates the uplink data and sends the uplink data to the CMTS PHY layer according to the uplink resource assignment information configured by the CMTS MAC layer and sent by the CMTS PHY layer, and then, the CMTS PHY layer demodulates and receives data according to the corresponding uplink resource assignment information.

After receiving the uplink data of the CM connected to the CMTS PHY layer, the CMTS PHY layer forwards the received uplink data of the CM to the CMTS MAC layer according to the determined time slice.

Optionally, in S201, the determining, by a CMTS PHY layer according to uplink resource assignment information of each CM, a time slice that is occupied when uplink data sent by a CM connected to the CMTS PHY layer is forwarded to CMTS MAC layer includes: determining, by the CMTS PHY layer, a forwarding order when uplink data sent by each CM is forwarded to the CMTS MAC layer; determining, according to the uplink resource assignment information configured by the CMTS MAC layer for each CM, a volume of forwarded data when the uplink data sent by each CM is forwarded to the CMTS MAC layer; determining, by the CMTS PHY layer according to the determined volume of forwarded data, a value of a time slice that is separately occupied when the uplink data sent by each CM is forwarded to the CMTS MAC layer; and determining, by the CMTS PHY layer according to the determined forwarding order and the value of the time slice, the time slice that is occupied when the uplink data sent by each CM is forwarded to the CMTS MAC layer; and determining, by the CMTS PHY layer, the time slice that is occupied when the uplink data sent by the CM connected to the CMTS PHY layer is forwarded to the CMTS MAC layer. Therefore, when a time slice corresponding to uplink data sent by a CM connected to the CMTS PHY layer arrives, the uplink data sent by the CM is forwarded to the CMTS MAC layer by using an optical fiber link.

To ensure a time of an optical switch, a guard interval needs to be inserted between time slices. Optionally, the determining, by the CMTS PHY layer according to the forwarding order and the value of the time slice, the time slice that is occupied when the uplink data sent by the CM connected to the CMTS PHY layer is forwarded to the CMTS MAC layer includes: determining, by the CMTS PHY layer, a guard interval when the uplink data sent by each CM is separately forwarded to the CMTS MAC layer; and determining, by the CMTS PHY layer according to the determined forwarding order, the value of the time slice, and the guard interval, the time slice that is occupied when the uplink data sent by the CM connected to the CMTS PHY layer is forwarded to the CMTS MAC layer.

Optionally, the uplink resource assignment information includes a time-frequency resource occupied by the uplink data and a profile identifier (profile ID) used by the uplink data.

The determining, by the CMTS PHY layer, a forwarding order when the uplink data sent by each CM is forwarded to the CMTS MAC layer includes: determining, by the CMTS PHY layer according to a time-frequency resource that is occupied when the uplink data sent by each CM is forwarded to the CMTS MAC layer, the forwarding order when the uplink data sent by each CM is forwarded to the CMTS MAC layer. Specifically, the forwarding order of the uplink data of each CM is assigned according to a location of a time-frequency resource occupied by the uplink data of the CM in an OFDMA two-dimensional coordinate, for example, the forwarding order is determined according to a location of a first minislot of an occupied timeslot resource in the OFDMA two-dimensional coordinate.

Optionally, the determining, by the CMTS PHY layer, a forwarding order when uplink data sent by each CM is forwarded to the CMTS MAC layer includes: determining, by the CMTS PHY layer according to an order in which the uplink resource assignment information configured for each CM is received, the forwarding order when the uplink data sent by each CM is forwarded to the CMTS MAC layer. For example, when the CMTS MAC layer broadcasts the uplink resource assignment information of the CM, the CMTS MAC layer broadcasts uplink resource assignment information of a CM 1 first, and then broadcasts uplink resource assignment information of a CM 2, so that when determining the forwarding order of the uplink data of the CM, the CMTS PHY layer places uplink data of the CM 1 before uplink data of the CM 2.

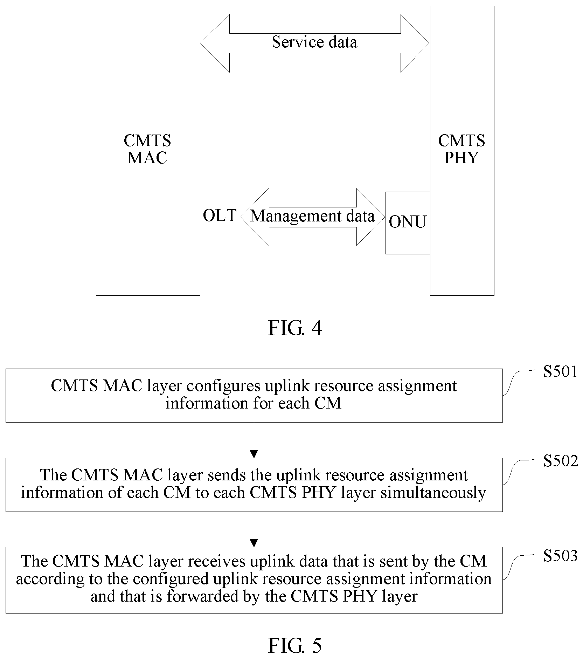

Further, in order to implement the steps shown in FIG. 2, use of an L2TPv3 scheduling manner is avoided, and an information exchange process needs to be re-determined. In this embodiment of the present invention, optical fiber links are classified into two logic channels: a management channel and a data channel according to the time slice, where the service channel is used to transmit service data, and the management channel is used to transmit management data, and for channel classification, transmission of the service data needs to be preferentially ensured. On the optical fiber link, each CMTS PHY layer forwards, on a respective time slice, the uplink data sent by the CM, and transmission is performed in a manner similar to a PON manner; therefore, an OLT module configured to receive uplink data of the service channel is implemented in the CMTS MAC layer, and an ONU module configured to send the uplink data of the service channel is implemented in the CMTS PHY layer, and the OLT module manages the ONU module by using the management channel, as shown in FIG. 4.

In this embodiment of the present invention, use of each logic channel of the optical fiber link is specified as follows:
The CMTS PHY layer classifies links between the CMTS PHY layer and the CMTS MAC layer into a management channel and a data channel in advance according to the time slice; the CMTS MAC layer also classifies the links between the CMTS PHY layer and the CMTS MAC layer into a management channel and a data channel in advance according to the time slice; and the CMTS PHY layer and the CMTS MAC layer align the management channel with the data channel through interaction.

The CMTS PHY layer transmits, by using the management channel, Data Over Cable Service Interface Specification (Docsis) management information including the uplink resource assignment information configured by the CMTS MAC layer separately for each CM. The Docsis management information includes information for CMTS service related scheduling performed by the CMTS MAC layer on the CMTS PHY layer, and scheduling performed by a CMTS on the CM, for example, a management message of a CMTS MAC layer for a CMTS PHY layer, online and offline management on the CM, and the like.

The CMTS PHY layer transmits management information of the links between the CMTS PHY layer and the CMTS MAC layer by using the management channel, that is, scheduling performed by the OLT module on the ONU module shown in FIG. 4. Scheduling in the PON manner may specifically use a request resource assignment (request-grant) manner in PON dynamic bandwidth assignment (DBA), and in this manner, uplink bandwidth assignment of each CMTS PHY layer can be scheduled, thereby improving utilization of an optical fiber channel.

Certainly, the management information of the link between the CMTS PHY layer and the CMTS MAC layer does not include service data scheduling. As shown in step S201 to step S202, assignment of the time slice when the CMTS PHY layer sends the uplink data of the CM to the CMTS MAC layer is determined by the CMTS PHY layer itself.

The CMTS PHY layer also transmits, by using the data channel, service data including the received uplink data sent by the CM connected to the CMTS PHY layer, and at uplink of the data channel, the CMTS MAC layer performs no scheduling, thereby reducing a delay of uplink service data.

In addition, when the CMTS PHY layer is initially connected to the CMTS MAC layer, the CMTS MAC layer and the CMTS PHY layer perform a ranging process to determine a round-trip delay from downlink sending of the CMTS MAC layer to uplink receiving, and then perform delay compensation accordingly, so as to ensure that an uplink signal of each CMTS PHY layer can be inserted into a specified timeslot after the uplink signal converges on the optical fiber line.

In this embodiment of the present invention, CMTS MAC layer assigns a coaxial uplink resource to a CM, so that a CMTS PHY layer directly determines uplink resource assignment, thereby avoiding scheduling on uplink service data on an optical fiber and reducing a delay of the uplink service data.

As shown in FIG. 5, a data transmission method provided by an embodiment of the present invention includes:
S501: CMTS MAC layer configures uplink resource assignment information for each CM.
S502: The CMTS MAC layer sends the uplink resource assignment information of each CM to each CMTS PHY layer simultaneously.
S503: The CMTS MAC layer receives uplink data that is sent by the CM according to the configured uplink resource assignment information and that is forwarded by the CMTS PHY layer.

Before receiving the uplink data that is sent by the CM according to the configured uplink resource assignment information and that is forwarded by the CMTS PHY layer, the CMTS MAC layer performs no scheduling on the uplink service data for the CMTS PHY layer.

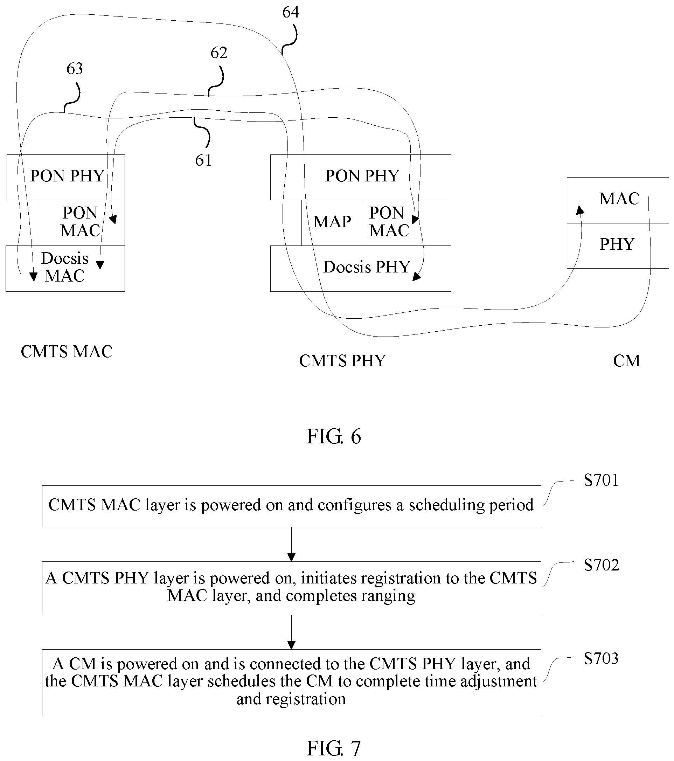

The following describes the principle of transmitting data in a network with reference to FIG. 6.

As shown in FIG. 4, a CMTS MAC layer apparatus and a CMTS PHY layer apparatus each have an OLT module and an ONU module, and corresponding to a PON transmission protocol, the CMTS MAC layer apparatus and the CMTS PHY layer apparatus each have a PON MAC module and a PON PHY module. Therefore, a logic structure of each apparatus at a central office is as follows: a Docsis MAC module, a PON MAC module, and a PON PHY module are configured in the CMTS MAC layer in sequence, and a Docsis PHY module, a PON MAC module, a mapping (MAP) module, and a PON PHY module are configured in the CMTS PHY layer in sequence; and information is transferred between the modules layer by layer.

Data is transmitted between the CMTS MAC layer and the CMTS PHY layer in the PON manner, and in specific implementation, transmission is performed by using the PON MAC module and the PON PHY module of the CMTS MAC layer and the PON MAC module and the PON PHY module of the CMTS PHY layer; the Docsis MAC module and the Docsis PHY module are respectively configured to implement a function of the CMTS MAC layer and a function of the CMTS PHY layer; and the MAP module is configured to perform uplink resource mapping, so that the uplink service data can be transmitted in the optical fiber directly without being scheduled by the CMTS MAC layer.

Specific meanings of each line in FIG. 6 are as follows:
A line 61 passes through the PON MAC module and the PON PHY module of the CMTS MAC layer, and the PON PHY module and the PON MAC module of the CMTS PHY layer, indicating management and scheduling on the optical fiber link; and when the CMTS PHY layer goes online initially, the CMTS PHY layer performs ranging and establishes a PON connection by using the line 61, and uses the management channel.

A line 62 passes through the Docsis MAC module, the PON MAC module, and the PON PHY module of the CMTS MAC layer, and the PON PHY module, the PON MAC module, and the Docsis PHY module of the CMTS PHY layer, indicating transmission of Docsis related management information between the CMTS MAC layer and the CMTS PHY layer, and the management channel is used.

A line 63 passes through the Docsis MAC module and the PON PHY module of the CMTS MAC layer, the PON PHY module and the Docsis PHY module of the CMTS PHY layer, and a PHY module and a MAC module of the CM, indicating transmission of downlink data of the CM, and because the downlink data uses a broadcast mode, the downlink data is transmitted by using the PON PHY directly and does not require the PON MAC to participate in scheduling, and the data channel is used.

A line 64 passes through the MAC module and the PHY module of the CM, the Docsis PHY module, the MAP module, and the PON PHY module of the CMTS PHY layer, and the PON PHY module and the Docsis MAC module of the CMTS MAC layer, indicating transmission of uplink data of the CM, and the uplink data of the CM is transmitted by using the PON PHY module directly according to a mapping result, and the data channel is used.

The following describes a network working process provided by an embodiment of the present invention with reference to an actual application scenario.

As shown in FIG. 7, a network initialization process includes:
S701: CMTS MAC layer is powered on, configures a scheduling period, aligns an uplink scheduling period with a downlink scheduling period, and aligns each logic channel.
S702: A CMTS PHY layer is powered on, initiates registration to the CMTS MAC layer, and completes ranging.
S703: A CM is powered on and is connected to the CMTS PHY layer, the CMTS PHY layer reports related connection information to the CMTS MAC layer, and the CMTS MAC layer schedules the CM to complete time adjustment and registration.

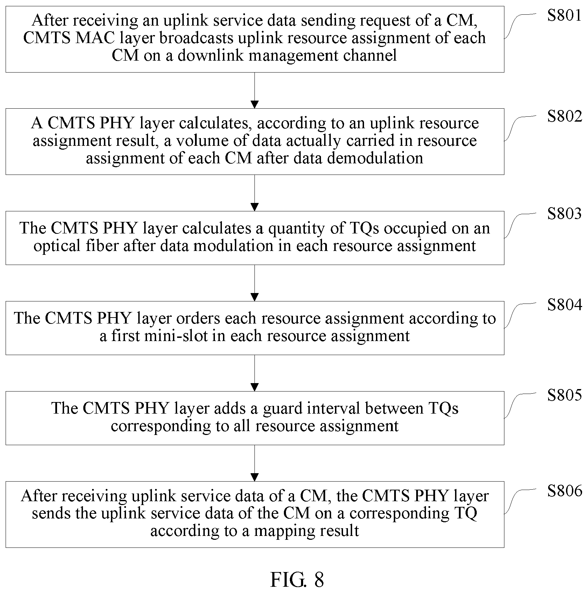

As shown in FIG. 8, an uplink data sending process includes:
S801: When receiving an uplink data sending request of a CM, CMTS MAC layer broadcasts uplink resource assignment of each CM, including a mini_slot assigned to each CM and a profile ID, on a downlink management channel.
S802: A CMTS PHY layer calculates, according to an uplink resource assignment result, a volume of data actually carried in resource assignment (grant) of each CM after data demodulation.
S803: The CMTS PHY layer calculates a quantity of time quanta (TQ) occupied on an optical fiber after data modulation in each grant.
S804: The CMTS PHY layer orders each grant according to a first mini_slot in each grant;
S805: The CMTS PHY layer adds a guard interval between TQs corresponding to all grant, and completes mapping from uplink resource assignment of the CM to a time slice of a data channel of the optical fiber.
S806: After receiving uplink service data of a CM connected to the CMTS PHY layer, the CMTS PHY layer sends the uplink service data of the CM on a corresponding TQ according to a mapping result.

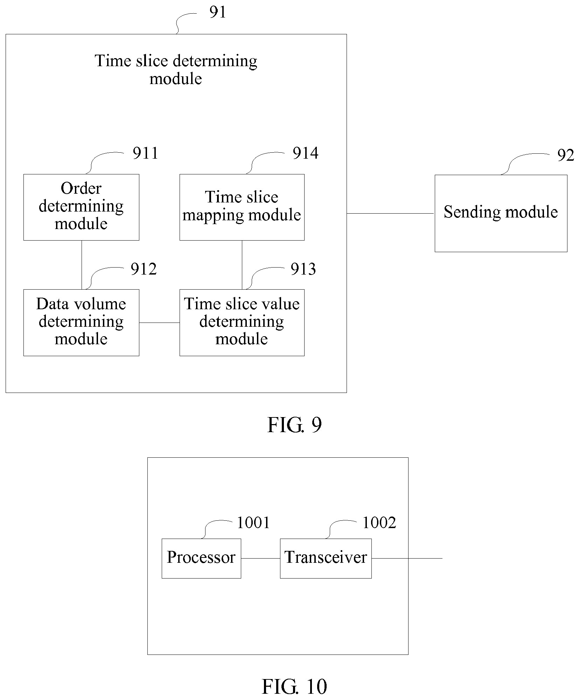

Referring to FIG. 9, an embodiment of the present invention provides a CMTS PHY layer apparatus, including:
a time slice determining module 91, configured to determine, according to uplink resource assignment information configured by a cable modem termination system Media Access Control layer CMTS MAC layer separately for each cable modem CM of multiple CMs, a time slice that is occupied when uplink data sent from a CM, connected to the CMTS PHY layer, of the multiple CMs is forwarded to the CMTS MAC layer; and
a sending module 92, configured to forward, to the CMTS MAC layer on the determined time slice, the received uplink data that is sent, by using the uplink resource assignment information configured by the CMTS MAC layer, by the CM connected to the CMTS PHY layer.

Optionally, the time slice determining module 91 includes:
an order determining module 911, configured to determine a forwarding order when uplink data sent by each CM is forwarded to the CMTS MAC layer;
a data volume determining module 912, configured to determine, according to the uplink resource assignment information configured by the CMTS MAC layer for each CM, a volume of forwarded data when the uplink data sent by each CM is forwarded to the CMTS MAC layer;
a time slice value determining module 913, configured to determine, according to the determined volume of forwarded data, a value of a time slice that is separately occupied when the uplink data sent by each CM is forwarded to the CMTS MAC layer; and
a time slice mapping module 914, configured to determine, according to the determined forwarding order and the value of the time slice, the time slice that is occupied when the uplink data sent by the CM connected to the CMTS PHY layer is forwarded to the CMTS MAC layer.

Optionally, the time slice mapping module 914 is specifically configured to:
determine a guard interval when the uplink data sent by each CM is separately forwarded to the CMTS MAC layer; and
determine, according to the determined forwarding order, the value of the time slice, and the guard interval, the time slice that is occupied when the uplink data sent by the CM connected to the CMTS PHY layer is forwarded to the CMTS MAC layer.

Optionally, the data volume determining module 912 is specifically configured to:
determine, according to a time-frequency resource occupied by the uplink data configured by the CMTS MAC layer for each CM and a profile identifier (profile ID) used by the uplink data, the volume of forwarded data when the uplink data sent by each CM is forwarded to the CMTS MAC layer.

The order determining module 911 is specifically configured to:
determine, according to a time-frequency resource that is occupied when the uplink data sent by each CM is forwarded to the CMTS MAC layer, the forwarding order
when the uplink data sent by each CM is forwarded to the CMTS MAC layer.

Optionally, the order determining module 911 is specifically configured to:
determine, according to an order in which the uplink resource assignment information configured for each CM is received, the forwarding order when the uplink data sent by each CM is forwarded to the CMTS MAC layer.

Optionally, the apparatus further includes:
a channel classification module, configured to classify, according to the time slice, links between the CMTS PHY layer and the CMTS MAC layer into a management channel and a data channel in advance; and
a Docsis management information transmitting module, configured to transmit, by using the management channel, Data Over Cable Service Interface Specification (Docsis) management information including the uplink resource assignment information configured by the CMTS MAC layer separately for each CM.

Optionally, the apparatus further includes:
a link management information transmitting module, configured to transmit management information of the links between the CMTS PHY layer and the CMTS MAC layer by using the management channel.

Optionally, the apparatus further includes:
a data channel transmitting module, configured to transmit, by using the data channel, service data including the received uplink data sent by the CM connected to the CMTS PHY layer.

Optionally, the apparatus further includes:
a ranging module, configured to perform a ranging process when the CMTS PHY layer is initially connected to the CMTS MAC layer, where a ranging result is used to perform delay compensation.

It should be noted that the CMTS PHY layer apparatus in this embodiment is for implementing the foregoing step S201 to step S202, and the foregoing explanation and limitation to the method are also applicable to the CMTS PHY layer apparatus in this embodiment.

Referring to FIG. 10, an embodiment of the present invention provides a CMTS PHY layer apparatus, including:
a processor 1001, configured to determine, according to uplink resource assignment information separately configured by a cable modem termination system Media Access Control layer CMTS MAC layer for each CM of multiple cable modems, a time slice that is occupied when uplink data sent from a CM, connected to the CMTS PHY layer, of the multiple CMs is forwarded to the CMTS MAC layer; and
a transceiver 1002, configured to forward, to the CMTS MAC layer on the determined time slice, the received uplink data that is sent, by using the uplink resource assignment information configured by the CMTS MAC layer, by the CM connected to the CMTS PHY layer.

The processor 1001 is specifically configured to:
determine a forwarding order when uplink data sent by each CM is forwarded to the CMTS MAC layer;
determine, according to the uplink resource assignment information configured by the CMTS MAC layer for each CM, a volume of forwarded data when the uplink data sent by each CM is forwarded to the CMTS MAC layer;
determine, according to the determined volume of forwarded data, a value of a time slice that is separately occupied when the uplink data sent by each CM is forwarded to the CMTS MAC layer; and
determine, according to the determined forwarding order and the value of the time slice, the time slice that is occupied when the uplink data sent by the CM connected to the CMTS PHY layer is forwarded to the CMTS MAC layer.

When the processor 1001 is configured to determine, according to the forwarding order and the value of the time slice, the time slice that is occupied when the uplink data sent by the CM connected to the CMTS PHY layer is forwarded to the CMTS MAC layer, the processor 1001 is specifically configured to:
determine a guard interval when the uplink data sent by each CM is separately forwarded to the CMTS MAC layer; and
determine, according to the determined forwarding order, the value of the time slice, and the guard interval, the time slice that is occupied when the uplink data sent by the CM connected to the CMTS PHY layer is forwarded to the CMTS MAC layer.

When the processor 1001 is configured to determine, according to the uplink resource assignment information configured by the CMTS MAC layer for each CM, the volume of forwarded data when the uplink data sent by each CM is forwarded to the CMTS MAC layer, the processor 1001 is specifically configured to:
determine, according to a time-frequency resource occupied by the uplink data configured by the CMTS MAC layer for each CM and a profile identifier (profile ID) used by the uplink data, the volume of forwarded data when the uplink data sent by each CM is forwarded to the CMTS MAC layer.

When the processor 1001 is configured to determine the forwarding order when the uplink data sent by each CM is forwarded to the CMTS MAC layer, the processor 1001 is specifically configured to:
determine, according to a time-frequency resource that is occupied when the uplink data sent by each CM is forwarded to the CMTS MAC layer, the forwarding order when the uplink data sent by each CM is forwarded to the CMTS MAC layer.

When the processor 1001 is configured to determine the forwarding order when the uplink data sent by each CM is forwarded to the CMTS MAC layer, the processor 1001 is specifically configured to:
determine, according to an order in which the uplink resource assignment information configured for each CM is received, the forwarding order when the uplink data sent by each CM is forwarded to the CMTS MAC layer.

The processor 1001 is further configured to classify, according to the time slice, links between the CMTS PHY layer and the CMTS MAC layer into a management channel and a data channel in advance; and
the transceiver 1002 is configured to transmit Data Over Cable Service Interface Specification (Docsis) management information including the uplink resource assignment information configured by the CMTS MAC layer for the CM connected to the CMTS PHY layer by using the management channel.

The transceiver 1002 is further configured to transmit management information of the links between the CMTS PHY layer and the CMTS MAC layer by using the management channel. The transceiver 1002 is further configured to transmit, by using the data channel, service data including the received uplink data sent by the CM connected to the CMTS PHY layer.

The processor 1001 is further configured to perform a ranging process when the processor 1001 is initially connected to the CMTS MAC layer, where a ranging result is used to perform delay compensation for the forwarded uplink data.

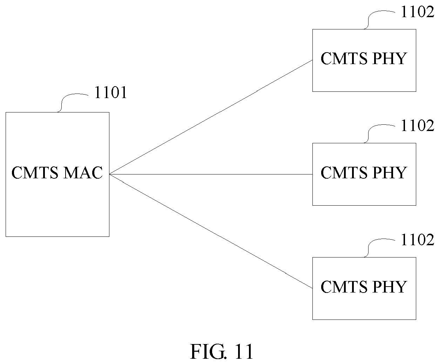

Referring to FIG. 11, an embodiment of the present invention provides a CMTS system, including:
a CMTS MAC layer apparatus 1101, configured to configure uplink resource assignment information of each cable modem CM of multiple CMs, and send the uplink resource assignment information configured for each CM of the multiple CMs to each cable modem termination system physical layer CMTS PHY layer apparatus; and
the CMTS PHY layer apparatus 1102, configured to determine, according to the uplink resource assignment information configured by the CMTS MAC layer apparatus separately for each CM of the multiple CMs, a time slice that is occupied when uplink data sent by a CM connected to the CMTS PHY layer apparatus 1102 of the multiple CMs is forwarded to the CMTS MAC layer; and forward, to the CMTS MAC layer on the determined time slice, the received uplink data that is sent, by using the uplink resource assignment information configured by the CMTS MAC layer, by the CM connected to the CMTS PHY layer.

Optionally, when the CMTS PHY layer apparatus 1102 is configured to determine, according to the uplink resource assignment information configured by the CMTS MAC layer apparatus separately for each CM, the time slice that is occupied when the uplink data sent by the CM connected to the CMTS PHY layer apparatus is forwarded to the CMTS MAC layer, the CMTS PHY layer apparatus 1102 is specifically configured to:
determine a forwarding order when uplink data sent by each CM is forwarded to the CMTS MAC layer;
determine, according to the uplink resource assignment information configured by the CMTS MAC layer for each CM, a volume of forwarded data when the uplink data sent by each CM is forwarded to the CMTS MAC layer;
determine, according to the determined volume of forwarded data, a value of a time slice that is separately occupied when the uplink data sent by each CM is forwarded to the CMTS MAC layer; and
determine, according to the determined forwarding order and the value of the time slice, the time slice that is occupied when the uplink data sent by the CM connected to the CMTS PHY layer is forwarded to the CMTS MAC layer.

Optionally, the determining, by the CMTS PHY layer 1102 according to the forwarding order and the value of the time slice, the time slice that is occupied when the uplink data sent by the CM connected to the CMTS PHY layer is forwarded to the CMTS MAC layer 1101 includes:
determining, by the CMTS PHY layer 1102, a guard interval when the uplink data sent by each CM is separately forwarded to the CMTS MAC layer 1101; and
determining, by the CMTS PHY layer 1102 according to the determined forwarding order, the value of the time slice, and the guard interval, the time slice that is occupied when the uplink data sent by the CM connected to the CMTS PHY layer is
forwarded to the CMTS MAC layer 1101.

Optionally, the uplink resource assignment information includes:
a time-frequency resource occupied by the uplink data and a profile identifier (profile ID) used by the uplink data.

Optionally, the determining, by the CMTS PHY layer 1102, a forwarding order when uplink data sent by each CM is forwarded to the CMTS MAC layer 1101 includes:
determining, by the CMTS PHY layer 1102 according to a time-frequency resource that is occupied when the uplink data sent by each CM is forwarded to the CMTS MAC layer 1101, the forwarding order when the uplink data sent by each CM is forwarded to the CMTS MAC layer 1101.

Optionally, the determining, by the CMTS PHY layer 1102, a forwarding order when uplink data sent by each CM is forwarded to the CMTS MAC layer 1101 includes:
determining, by the CMTS PHY layer 1102 according to an order in which the uplink resource assignment information configured for each CM is received, the forwarding order when the uplink data sent by each CM is forwarded to the CMTS MAC layer 1101.

Optionally, the CMTS MAC layer 1101 and the CMTS PHY layer 1102 classify links between the CMTS PHY layer 1102 and the CMTS MAC layer 1101 into a management channel and a data channel in advance according to the time slice; and
the CMTS MAC layer 1101 and the CMTS PHY layer 1102 transmit, by using the management channel, Data Over Cable Service Interface Specification (Docsis) management information including the uplink resource assignment information separately configured by the CMTS MAC layer 11 owl for each CM.

Optionally, the CMTS MAC layer 1101 and the CMTS PHY layer 1102 transmit management information of the links between the CMTS PHY layer 1102 and the CMTS MAC layer 1101 by using the management channel.

Optionally, the CMTS MAC layer 1101 and the CMTS PHY layer 1102 transmit, by using the data channel, service data including the uplink data sent by the CM connected to the CMTS PHY layer and received by the CMTS PHY layer.

To sum up, in this embodiment of the present invention, each CMTS PHY layer directly determines, according to a result of uplink scheduling performed by CMTS MAC layer on the CM, uplink resource assignment when the CMTS PHY layer sends uplink data of a CM to the CMTS MAC layer, so that each CMTS PHY layer sends, on a determined time slice, uplink data of a CM connected to the CMTS PHY layer. Therefore, the CMTS MAC layer is prevented from scheduling the CMTS PHY layer again when the CMTS PHY layer needs to send the uplink data to the CMTS MAC layer, and a delay of the uplink data is reduced and network performance is improved by reducing one time of uplink data scheduling.

Persons skilled in the art should understand that the embodiments of the present invention may be provided as a method, a system, or a computer program product. Therefore, the present invention may use a form of a complete hardware embodiment, a complete software embodiment, or an embodiment combining software and hardware. In addition, the present invention may use a form of a computer program product implemented on one or more computer-usable storage media (including, but not limited to, a disk memory, a CD-ROM, an optical memory, and the like) including computer-usable program code.

The present invention is described with reference to flowcharts and/or block diagrams of the method, the device (system), and the computer program product in the embodiments of the present invention. It should be understood that computer program instructions may be used to implement each process and/or each block in the flowcharts and/or block diagrams and a combination of a process and/or a block in the flowcharts and/or the block diagrams. These computer program instructions may be provided to a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may also be stored in a computer readable memory that can instruct a computer or another programmable data processing terminal device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable data processing device, thereby generating computer-implemented processing. Therefore, the instructions executed on the computer or another programmable data processing device provide steps for implementing a specific function in one or more processes in the flowcharts and/or in one or more blocks in the block diagrams. Although the embodiments of the present invention have been described, persons skilled in the art can make changes and modifications to these embodiments once they learn the basic inventive concept. Therefore, the following claims are intended to be construed as to cover the embodiments and all changes and modifications falling within the scope of the present invention.

Obviously, persons skilled in the art can make various modifications and variations to the embodiments of the present invention without departing from the scope of the embodiments of the present invention. In this way, the present invention is intended to cover the modifications and variations to the embodiments of the present invention provided that the modifications and variations fall within the scope of the claims of the present invention.

## Claims

1. A data transmission method, wherein the method comprises:
determining (S201), by a cable modem termination system physical, CMTS PHY, layer according to uplink resource assignment information configured by a cable modem termination system Media Access Control, CMTS MAC, layer separately for each cable modem, CM, of multiple CMs, a time slice that needs to be occupied when uplink data sent from a CM connected to the CMTS PHY layer, is forwarded to the CMTS MAC layer, wherein the CMTS PHY layer is a remote CMTS PHY layer and the CTMS MAC layer is connected to the remote CMTS PHY layer by using an optical fiber; and
forwarding (S202), by the CMTS PHY layer to the CMTS MAC layer on the determined time slice, the received uplink data that is sent, by using the uplink resource assignment information configured by the CMTS MAC layer, by the CM connected to the CMTS PHY layer.

2. The method according to claim 1, wherein the determining (S201), by a CMTS PHY layer according to uplink resource assignment information of each CM, a time slice that needs to be occupied when uplink data sent by a CM connected to the CMTS PHY layer is forwarded to the CMTS MAC layer comprises:
determining, by the CMTS PHY layer, a forwarding order when uplink data sent by each CM is forwarded to the CMTS MAC layer;
determining, according to the uplink resource assignment information configured by the CMTS MAC layer for each CM, a volume of forwarded data when the uplink data sent by each CM is forwarded to the CMTS MAC layer;
determining, by the CMTS PHY layer according to the determined volume of forwarded data, a value of a time slice that is separately occupied when the uplink data sent by each CM is forwarded to the CMTS MAC layer; and
determining, by the CMTS PHY layer according to the determined forwarding order and the value of the time slice, the time slice that needs to be occupied when the uplink data sent by the CM connected to the CMTS PHY layer is forwarded to the CMTS MAC layer.

3. The method according to claim 2, wherein the determining, by the CMTS PHY layer according to the determined forwarding order and the value of the time slice, the time slice that needs to be occupied when the uplink data sent by the CM connected to the CMTS PHY layer is forwarded to the CMTS MAC layer comprises:
determining, by the CMTS PHY layer, a guard interval when the uplink data sent by each CM is separately forwarded to the CMTS MAC layer; and
determining, by the CMTS PHY layer according to the determined forwarding order, the value of the time slice, and the guard interval, the time slice that is occupied when the uplink data sent by the CM connected to the CMTS PHY layer is forwarded to the CMTS MAC layer.

4. The method according to claim 2, wherein the uplink resource assignment information comprises:
a time-frequency resource occupied by the uplink data and a profile identifier used by the uplink data.

5. The method according to claim 4, wherein the determining, by the CMTS PHY layer, a forwarding order when uplink data sent by each CM is forwarded to the CMTS MAC layer comprises:
determining, by the CMTS PHY layer according to a time-frequency resource that is occupied when the uplink data sent by each CM is forwarded to the CMTS MAC layer, the forwarding order when the uplink data sent by each CM is forwarded to the CMTS MAC layer.

6. The method according to claim 2 or 3, wherein the determining, by the CMTS PHY layer, a forwarding order when uplink data sent by each CM is forwarded to the CMTS MAC layer comprises:
determining, by the CMTS PHY layer according to an order in which the uplink resource assignment information configured for each CM is received, the forwarding order when the uplink data sent by each CM is forwarded to the CMTS MAC layer.

7. The method according to claim 1, wherein the receiving, by the CMTS PHY layer, the uplink resource assignment information configured by the CMTS MAC layer separately for each CM comprises:
classifying, by the CMTS PHY layer, links between the CMTS PHY layer and the CMTS MAC layer into a management channel and a data channel in advance according to the time slice; and
transmitting, by the CMTS PHY layer by using the management channel, Data Over Cable Service Interface Specification, Docsis, management information comprising the uplink resource assignment information configured by the CMTS MAC layer separately for each CM.

8. The method according to claim 7, wherein the method further comprises:
transmitting, by the CMTS PHY layer, management information of the links between the CMTS PHY layer and the CMTS MAC layer by using the management channel.

9. A remote cable modem termination system physical, CMTS PHY, layer apparatus, wherein the apparatus (1102) comprises:
a time slice determining module (91), configured to determine, according to uplink resource assignment information configured by a cable modem termination system Media Access Control, CMTS MAC, layer separately for each cable modem, CM, of multiple CMs, a time slice that needs to be occupied when uplink data sent from a CM connected to the CMTS PHY layer, is forwarded to the CMTS MAC layer; and
a sending module (92), configured to forward, to the CMTS MAC layer on the determined time slice, the received uplink data that is sent, by using the uplink resource assignment information configured by the CMTS MAC layer, by the CM connected to the CMTS PHY layer;
wherein the CMTS PHY layer is configured to demodulate and decode the received uplink data that is sent by the CM using a coaxial cable, to code and modulate the decoded data to convert a coaxial signal into an optical fiber signal, and to send the optical fiber signal to the CMTS MAC layer.

10. The apparatus (1102) according to claim 9, wherein the time slice determining module (91) comprises:
an order determining module (911), configured to determine a forwarding order when uplink data sent by each CM is forwarded to the CMTS MAC layer;
a data volume determining module (912), configured to determine, according to the uplink resource assignment information configured by the CMTS MAC layer for each CM, a volume of forwarded data when the uplink data sent by each CM is forwarded to the CMTS MAC layer;
a time slice value determining module (913), configured to determine, according to the determined volume of forwarded data, a value of a time slice that is separately occupied when the uplink data sent by each CM is forwarded to the CMTS MAC layer; and
a time slice mapping module (914), configured to determine, according to the determined forwarding order and the value of the time slice, the time slice that needs to be occupied when the uplink data sent by the CM connected to the CMTS PHY layer is forwarded to the CMTS MAC layer.

11. The apparatus (1102) according to claim 10, wherein the time slice mapping module (914) is specifically configured to:
determine a guard interval when the uplink data sent by each CM is separately forwarded to the CMTS MAC layer; and
determine, according to the determined forwarding order, the value of the time slice, and the guard interval, the time slice that is occupied when the uplink data sent by the CM connected to the CMTS PHY layer is forwarded to the CMTS MAC layer.

12. The apparatus (1102) according to claim 10, wherein the data volume determining module (912) is specifically configured to:
determine, according to a time-frequency resource occupied by the uplink data configured by the CMTS MAC layer for each CM and a profile identifier used by the uplink data, the volume of forwarded data when the uplink data sent by each CM is forwarded to the CMTS MAC layer.

13. The apparatus (1102) according to claim 12, wherein the order determining module (911) is specifically configured to:
determine, according to a time-frequency resource that is occupied when the uplink data sent by each CM is forwarded to the CMTS MAC layer, the forwarding order when the uplink data sent by each CM is forwarded to the CMTS MAC layer.

14. The apparatus (1102) according to claim 10 or 11, wherein the order determining module (911) is specifically configured to:
determine, according to an order in which the uplink resource assignment information configured for each CM is received, the forwarding order when the uplink data sent by each CM is forwarded to the CMTS MAC layer.

15. A data transmission system, wherein the system comprises:
a cable modem termination system Media Access Control, CMTS MAC, layer apparatus (1101), configured to configure uplink resource assignment information of each cable modem, CM, of multiple CMs, and send the uplink resource assignment information configured for each CM of the multiple CMs to each remote cable modem termination system physical, CMTS PHY, layer apparatus (1102); and
the remote CMTS PHY layer apparatus (1102), configured to determine, according to the uplink resource assignment information configured by the CMTS MAC layer apparatus (1101) separately for each CM of the multiple CMs, a time slice that needs to be occupied when uplink data sent from a CM connected to the CMTS PHY layer apparatus (1102), is forwarded to the CMTS MAC layer; and forward, to the CMTS MAC layer on the determined time slice, the received uplink data that is sent, by using the uplink resource assignment information configured by the CMTS MAC layer, by the CM connected to the CMTS PHY layer;
wherein the CMTS PHY layer is configured to demodulate and decode the received uplink data that is sent by the CM using a coaxial cable, to code and modulate the decoded data to convert a coaxial signal into an optical fiber signal, and to send the optical fiber signal to the CMTS MAC layer.

16. The system according to claim 15, wherein when the CMTS PHY layer apparatus (1102) is configured to determine, according to the uplink resource assignment information configured by the CMTS MAC layer apparatus (1101) separately for each CM of the multiple CMs, the time slice that needs to be occupied when the uplink data sent by the CM, connected to the CMTS PHY layer apparatus (1102), of the multiple CMs is forwarded to the CMTS MAC layer, the CMTS PHY layer apparatus (1102) is specifically configured to:
determine a forwarding order when uplink data sent by each CM is forwarded to the CMTS MAC layer;
determine, according to the uplink resource assignment information configured by the CMTS MAC layer for each CM, a volume of forwarded data when the uplink data sent by each CM is forwarded to the CMTS MAC layer;
determine, according to the determined volume of forwarded data, a value of a time slice that is separately occupied when the uplink data sent by each CM is forwarded to the CMTS MAC layer; and
determine, according to the determined forwarding order and the value of the time slice, the time slice that needs to be occupied when the uplink data sent by the CM connected to the CMTS PHY layer is forwarded to the CMTS MAC layer.

## Patentansprüche

1. Datenübertragungsverfahren, wobei das Verfahren Folgendes umfasst:
Bestimmen (S201) durch eine Kabelmodemabschlusssystem-Bitübertragungsschicht, CMTS-PHY-Schicht, gemäß Aufwärtsstreckenbetriebsmittelzuweisungsinformationen, die durch eine Kabelmodemabschlusssystem-Medienzugangssteuerungsschicht, CMTS-MAC-Schicht, getrennt für jedes Kabelmodem, CM, aus mehreren CMs konfiguriert sind, einer Zeitscheibe, die besetzt werden muss, wenn Aufwärtsstreckendaten, die von einem CM gesendet werden, das mit der CMTS-PHY-Schicht verbunden ist, zu der CMTS-MAC-Schicht weitergeleitet werden, wobei die CMTS-PHY-Schicht eine entfernte CMTS-PHY-Schicht ist und die CMTS-MAC-Schicht mit der entfernten CMTS-PHY-Schicht unter Verwendung eines Lichtleiters verbunden ist; und
Weiterleiten (S202) durch die CMTS-PHY-Schicht zu der CMTS-MAC-Schicht auf der bestimmten Zeitscheibe der empfangenen Aufwärtsstreckendaten, die unter Verwendung der Aufwärtsstreckenbetriebsmittelzuweisungsinformationen, die durch die CMTS-MAC-Schicht konfiguriert sind, durch das CM, das mit der CMTS-PHY-Schicht verbunden ist, gesendet werden.

2. Verfahren nach Anspruch 1, wobei das Bestimmen (S201) durch eine CMTS-PHY-Schicht gemäß den Aufwärtsstreckenbetriebsmittelzuweisungsinformationen jedes CM einer Zeitscheibe, die besetzt werden muss, wenn Aufwärtsstreckendaten, die durch ein CM, das mit der CMTS-PHY-Schicht verbunden ist, gesendet werden, zu der CMTS-MAC-Schicht weitergeleitet werden, Folgendes umfasst:
Bestimmen durch die CMTS-PHY-Schicht einer Weiterleitungsreihenfolge, wenn Aufwärtsstreckendaten, die durch jedes CM gesendet werden, zu der CMTS-MAC-Schicht weitergeleitet werden;
Bestimmen gemäß den Aufwärtsstreckenbetriebsmittelzuweisungsinformationen, die durch die CMTS-MAC-Schicht für jedes CM konfiguriert sind, eines Volumens weitergeleiteter Daten, wenn die Aufwärtsstreckendaten, die durch jedes CM gesendet werden, zu der CMTS-MAC-Schicht weitergeleitet werden;
Bestimmen durch die CMTS-PHY-Schicht gemäß dem bestimmten Volumen weitergeleiteter Daten eines Werts einer Zeitscheibe, die getrennt besetzt wird, wenn die Aufwärtsstreckendaten, die durch jedes CM gesendet werden, zu der CMTS-MAC-Schicht weitergeleitet werden; und
Bestimmen durch die CMTS-PHY-Schicht gemäß der bestimmten Weiterleitungsreihenfolge und dem Wert der Zeitscheibe der Zeitscheibe, die besetzt werden muss, wenn die Aufwärtsstreckendaten, die durch das CM, das mit der CMTS-PHY-Schicht verbunden ist, gesendet werden, zu der CMTS-MAC-Schicht weitergeleitet werden.

3. Verfahren nach Anspruch 2, wobei das Bestimmen durch die CMTS-PHY-Schicht gemäß der bestimmten Weiterleitungsreihenfolge und dem Wert der Zeitscheibe der Zeitscheibe, die besetzt werden muss, wenn die Aufwärtsstreckendaten, die durch das CM, das mit der CMTS-PHY-Schicht verbunden ist, gesendet werden, zu der CMTS-MAC-Schicht weitergeleitet werden, Folgendes umfasst:
Bestimmen durch die CMTS-PHY-Schicht eines Schutzintervalls, wenn die Aufwärtsstreckendaten, die durch jedes CM gesendet werden, getrennt zu der CMTS-MAC-Schicht weitergeleitet werden; und
Bestimmen durch die CMTS-PHY-Schicht gemäß der bestimmten Weiterleitungsreihenfolge, dem Wert der Zeitscheibe und dem Schutzintervall der Zeitscheibe, die besetzt wird, wenn die Aufwärtsstreckendaten, die durch das CM, das mit der CMTS-PHY-Schicht verbunden ist, gesendet werden, zu der CMTS-MAC-Schicht weitergeleitet werden.

4. Verfahren nach Anspruch 2, wobei die Aufwärtsstreckenbetriebsmittelzuweisungsinformationen Folgendes umfassen:
ein Zeit-Frequenz-Betriebsmittel, das durch die Aufwärtsstreckendaten besetzt ist, und eine Profilkennung, die durch die Aufwärtsstreckendaten verwendet wird.

5. Verfahren nach Anspruch 4, wobei das Bestimmen durch die CMTS-PHY-Schicht einer Weiterleitungsreihenfolge, wenn Aufwärtsstreckendaten, die durch jedes CM gesendet werden, zu der CMTS-MAC-Schicht weitergeleitet werden, Folgendes umfasst:
Bestimmen durch die CMTS-PHY-Schicht gemäß einem Zeit-Frequenz-Betriebsmittel, das besetzt wird, wenn die Aufwärtsstreckendaten, die durch jedes CM gesendet werden, zu der CMTS-MAC-Schicht weitergeleitet werden, der Weiterleitungsreihenfolge, wenn die Aufwärtsstreckendaten, die durch jedes CM gesendet werden, zu der CMTS-MAC-Schicht weitergeleitet werden.

6. Verfahren nach Anspruch 2 oder 3, wobei das Bestimmen durch die CMTS-PHY-Schicht einer Weiterleitungsreihenfolge, wenn Aufwärtsstreckendaten, die durch jedes CM gesendet werden, zu der CMTS-MAC-Schicht weitergeleitet werden, Folgendes umfasst:
Bestimmen durch die CMTS-PHY-Schicht gemäß einer Reihenfolge, in der die Aufwärtsstreckenbetriebsmittelzuweisungsinformationen, die für jedes CM konfiguriert sind, empfangen werden, der Weiterleitungsreihenfolge, wenn die Aufwärtsstreckendaten, die durch jedes CM gesendet werden, zu der CMTS-MAC-Schicht weitergeleitet werden.

7. Verfahren nach Anspruch 1, wobei das Empfangen durch die CMTS-PHY-Schicht der Aufwärtsstreckenbetriebsmittelzuweisungsinformationen, die durch die CMTS-MAC-Schicht getrennt für jedes CM konfiguriert sind, Folgendes umfasst:
Klassifizieren durch die CMTS-PHY-Schicht von Verbindungsstrecken zwischen der CMTS-PHY-Schicht und der CMTS-MAC-Schicht in einen Managementkanal und einen Datenkanal im Voraus gemäß der Zeitscheibe;
Übertragen durch die CMTS-PHY-Schicht unter Verwendung des Managementkanals von Daten-über-Kabel-Dienst-Schnittstellenspezifikations-Managementinformationen, Docsis-Managementinformationen, die die Aufwärtsstreckenbetriebsmittelzuweisungsinformationen, die durch die CMTS-MAC-Schicht getrennt für jedes CM konfiguriert sind, enthalten.

8. Verfahren nach Anspruch 7, wobei das Verfahren ferner Folgendes umfasst:
Übertragen durch die CMTS-PHY-Schicht von Managementinformationen über die Verbindungsstrecken zwischen der CMTS-PHY-Schicht und der CMTS-MAC-Schicht unter Verwendung des Managementkanals.

9. Entfernte Kabelmodemabschlusssystem-Bitübertragungsschicht-Vorrichtung, CMTS-PHY-Schicht-Vorrichtung, wobei die Vorrichtung (1102) Folgendes umfasst:
ein Zeitscheibenbestimmungsmodul (91), das konfiguriert ist, gemäß Aufwärtsstreckenbetriebsmittelzuweisungsinformationen, die durch eine Kabelmodemabschlusssystem-Medienzugangssteuerungs-Schicht, CMTS-MAC-Schicht, getrennt für jedes Kabelmodem, CM, aus mehreren CMs konfiguriert sind, eine Zeitscheibe zu bestimmen, die besetzt werden muss, wenn Aufwärtsstreckendaten, die von einem CM, das mit der CMTS-PHY-Schicht verbunden ist, gesendet werden, zu der CMTS-MAC-Schicht weitergeleitet werden; und
ein Sendemodul (92), das konfiguriert ist, die empfangenen Aufwärtsstreckendaten, die unter Verwendung der Aufwärtsstreckenbetriebsmittelzuweisungsinformationen, die durch die CMTS-MAC-Schicht konfiguriert sind, durch das CM, das mit der CMTS-PHY-Schicht verbunden ist, gesendet werden, zu der CMTS-MAC-Schicht auf der bestimmten Zeitscheibe weiterzuleiten;
wobei die CMTS-PHY-Schicht konfiguriert ist, die empfangenen Aufwärtsstreckendaten, die durch das CM unter Verwendung eines Koaxialkabels gesendet werden, zu demodulieren und zu decodieren, die decodierten Daten zu codieren und zu modulieren, um ein Koaxialsignal in ein Lichtleitersignal umzusetzen, und das Lichtleitersignal zu der CMTS-MAC-Schicht zu senden.

10. Vorrichtung (1102) nach Anspruch 9, wobei das Zeitscheibenbestimmungsmodul (91) Folgendes umfasst:
ein Reihenfolgebestimmungsmodul (911), das konfiguriert ist, eine Weiterleitungsreihenfolge zu bestimmen, wenn Aufwärtsstreckendaten, die durch jedes CM gesendet werden, zu der CMTS-MAC-Schicht weitergeleitet werden;
ein Datenvolumenbestimmungsmodul (912), das konfiguriert ist, gemäß den Aufwärtsstreckenbetriebsmittelzuweisungsinformationen, die durch die CMTS-MAC-Schicht für jedes CM konfiguriert sind, ein Volumen weitergeleiteter Daten, wenn die Aufwärtsstreckendaten, die durch jedes CM gesendet werden, zu der CMTS-MAC-Schicht weitergeleitet werden, zu bestimmen;
ein Zeitscheibenwertbestimmungsmodul (913), das konfiguriert ist, gemäß dem bestimmten Volumen weitergeleiteter Daten einen Wert einer Zeitscheibe, die getrennt besetzt wird, wenn die Aufwärtsstreckendaten, die durch jedes CM gesendet werden, zu der CMTS-MAC-Schicht weitergeleitet werden, zu bestimmen; und
ein Zeitscheibenabbildungsmodul (914), das konfiguriert ist, gemäß der bestimmten Weiterleitungsreihenfolge und dem Wert der Zeitscheibe die Zeitscheibe zu bestimmen, die besetzt werden muss, wenn die Aufwärtsstreckendaten, die durch das CM, das mit der CMTS-PHY-Schicht verbunden ist, gesendet werden, zu der CMTS-MAC-Schicht weitergeleitet werden.

11. Vorrichtung (1102) nach Anspruch 10, wobei das Zeitscheibenabbildungsmodul (914) insbesondere konfiguriert ist:
ein Schutzintervall zu bestimmen, wenn die Aufwärtsstreckendaten, die durch jedes CM gesendet werden, getrennt zu der CMTS-MAC-Schicht weitergeleitet werden; und
gemäß der bestimmten Weiterleitungsreihenfolge, dem Wert der Zeitscheibe und dem Schutzintervall die Zeitscheibe zu bestimmen, die besetzt wird, wenn die Aufwärtsstreckendaten, die durch das CM, das mit der CMTS-PHY-Schicht verbunden ist, gesendet werden, zu der CMTS-MAC-Schicht weitergeleitet werden.

12. Vorrichtung (1102) nach Anspruch 10, wobei das Datenvolumenbestimmungsmodul (912) insbesondere konfiguriert ist:
gemäß einem Zeit-Frequenz-Betriebsmittel, das durch die Aufwärtsstreckendaten besetzt ist, die durch die CMTS-MAC-Schicht für jedes CM konfiguriert sind, und einer Profilkennung, die durch die Aufwärtsstreckendaten verwendet wird, das Volumen der weitergeleiteten Daten zu bestimmen, wenn Aufwärtsstreckendaten, die durch jedes CM gesendet werden, zu der CMTS-MAC-Schicht weitergeleitet werden.

13. Vorrichtung (1102) nach Anspruch 12, wobei das Reihenfolgebestimmungsmodul (911) insbesondere konfiguriert ist:
gemäß einem Zeit-Frequenz-Betriebsmittel, das besetzt wird, wenn die Aufwärtsstreckendaten, die durch jedes CM gesendet werden, zu der CMTS-MAC-Schicht weitergeleitet werden, die Weiterleitungsreihenfolge zu bestimmen, wenn die Aufwärtsstreckendaten, die durch jedes CM gesendet werden, zu der CMTS-MAC-Schicht weitergeleitet werden.

14. Vorrichtung (1102) nach Anspruch 10 oder 11, wobei das Reihenfolgebestimmungsmodul (911) insbesondere konfiguriert ist:
gemäß einer Reihenfolge, in der die Aufwärtsstreckenbetriebsmittelzuweisungsinformationen, die für jedes CM konfiguriert sind, empfangen werden, die Weiterleitungsreihenfolge zu bestimmen, wenn die Aufwärtsstreckendaten, die durch jedes CM gesendet werden, zu der CMTS-MAC-Schicht weitergeleitet werden.

15. Datenübertragungssystem, wobei das System Folgendes umfasst:
eine Kabelmodemabschlusssystem-Medienzugangssteuerungsschicht-Vorrichtung, CMTS-MAC-Schicht-Vorrichtung (1101) die konfiguriert ist, Aufwärtsstreckenbetriebsmittelzuweisungsinformationen jedes Kabelmodems, CM, aus mehreren CMs zu konfigurieren und die Aufwärtsstreckenbetriebsmittelzuweisungsinformationen, die für jedes CM aus den mehreren CMs konfiguriert sind, zu jeder entfernten Kabelmodemabschlusssystem-Bitübertragungsschicht-Vorrichtung, CMTS-PHY-Schicht-Vorrichtung, (1102) zu senden; und
die entfernte CMTS-PHY-Schicht-Vorrichtung (1102), die konfiguriert ist, gemäß den Aufwärtsstreckenbetriebsmittelzuweisungsinformationen, die durch die CMTS-MAC-Schicht-Vorrichtung (1101) getrennt für jedes CM aus den mehreren CMs konfiguriert sind, eine Zeitscheibe zu bestimmen, die besetzt werden muss, wenn Aufwärtsstreckendaten, die von einem CM, das mit der CMTS-PHY-Schicht-Vorrichtung (1102) verbunden ist, gesendet werden, zu der CMTS-MAC-Schicht weitergeleitet werden; und die empfangenen Aufwärtsstreckendaten, die unter Verwendung der Aufwärtsstreckenbetriebsmittelzuweisungsinformationen, die durch die CMTS-MAC-Schicht konfiguriert sind, durch das CM, das mit der CMTS-PHY-Schicht verbunden ist, gesendet werden, zu der CMTS-MAC-Schicht auf der bestimmten Zeitscheibe weiterzuleiten;
wobei die CMTS-PHY-Schicht konfiguriert ist, die empfangenen Aufwärtsstreckendaten, die durch das CM unter Verwendung eines Koaxialkabels gesendet werden, zu demodulieren und zu decodieren, die decodierten Daten zu codieren und zu modulieren, um ein Koaxialsignal in ein Lichtleitersignal umzusetzen, und das Lichtleitersignal zu der CMTS-MAC-Schicht zu senden.

16. System nach Anspruch 15, wobei, wenn die CMTS-PHY-Schicht-Vorrichtung (1102) konfiguriert ist, gemäß den Aufwärtsstreckenbetriebsmittelzuweisungsinformationen, die durch die CMTS-MAC-Schicht-Vorrichtung (1101) getrennt für jedes CM aus den mehreren CMs konfiguriert sind, die Zeitscheibe zu bestimmen, die besetzt werden muss, wenn die Aufwärtsstreckendaten, die durch das CM aus den mehreren CMs, das mit der CMTS-PHY-Schicht-Vorrichtung (1102) verbunden ist, gesendet werden, zu der CMTS-MAC-Schicht weitergeleitet werden, die CMTS-PHY-Schicht-Vorrichtung (1102) insbesondere konfiguriert ist:
eine Weiterleitungsreihenfolge zu bestimmen, wenn Aufwärtsstreckendaten, die durch jedes CM gesendet werden, zu der CMTS-MAC-Schicht weitergeleitet werden;
gemäß den Aufwärtsstreckenbetriebsmittelzuweisungsinformationen, die durch die CMTS-MAC-Schicht für jedes CM konfiguriert sind, ein Volumen weitergeleiteter Daten zu bestimmen, wenn die Aufwärtsstreckendaten, die durch jedes CM gesendet werden, zu der CMTS-MAC-Schicht weitergeleitet werden;
gemäß dem bestimmten Volumen weitergeleiteter Daten einen Wert einer Zeitscheibe zu bestimmen, die getrennt besetzt wird, wenn die Aufwärtsstreckendaten, die durch jedes CM gesendet werden, zu der CMTS-MAC-Schicht weitergeleitet werden; und
gemäß der bestimmten Weiterleitungsreihenfolge und dem Wert der Zeitscheibe die Zeitscheibe zu bestimmen, die besetzt werden muss, wenn die Aufwärtsstreckendaten, die durch das CM, das mit der CMTS-PHY-Schicht verbunden ist, gesendet werden, zu der CMTS-MAC-Schicht weitergeleitet werden.

## Revendications

1. Procédé de transmission de données, le procédé comprenant :
la détermination (S201), par une couche physique de système de terminaison de modems câblés, dite couche PHY CMTS, selon des informations d'allocation de ressources montantes configurées par une couche de commande d'accès au support de système de terminaison de modems câblés, dite couche MAC CMTS, séparément pour chaque modem câblé, dit CM, d'une pluralité de CM, d'une tranche de temps qui doit être occupée lorsque des données montantes envoyées depuis un CM connecté à la couche PHY CMTS sont réacheminées vers la couche MAC CMTS, la couche PHY CMTS étant une couche PHY CMTS distante et la couche MAC CTMS étant connectée à la couche PHY CMTS au moyen d'une fibre optique ; et
le réacheminement (S202), par la couche PHY CMTS vers la couche MAC CMTS sur la tranche de temps déterminée, des données montantes reçues qui sont envoyées, au moyen des informations d'allocation de ressources montantes configurées par la couche MAC CMTS, par le CM connecté à la couche PHY CMTS.

2. Procédé selon la revendication 1, dans lequel la détermination (S201), par une couche PHY CMTS, selon des informations d'allocation de ressources montantes relatives à chaque CM, d'une tranche de temps qui doit être occupée lorsque des données montantes envoyées par un CM connecté à la couche PHY CMTS sont réacheminées vers la couche MAC CMTS comprend :
la détermination, par la couche PHY CMTS, d'un ordre de réacheminement lorsque des données montantes envoyées par chaque CM sont réacheminées vers la couche MAC CMTS ;
la détermination, selon les informations d'allocation de ressources montantes configurées par la couche MAC CMTS pour chaque CM, d'un volume des données réacheminées lorsque les données montantes envoyées par chaque CM sont réacheminées vers la couche MAC CMTS ;
la détermination, par la couche PHY CMTS, selon le volume déterminé de données réacheminées, d'une valeur d'une tranche de temps qui est occupée séparément lorsque les données montantes envoyées par chaque CM sont réacheminées vers la couche MAC CMTS ; et
la détermination, par la couche PHY CMTS, selon l'ordre de réacheminement déterminé et la valeur de la tranche de temps, de la tranche de temps qui doit être occupée lorsque les données montantes envoyées par le CM connecté à la couche PHY CMTS sont réacheminées vers la couche MAC CMTS.

3. Procédé selon la revendication 2, dans lequel la détermination, par la couche PHY CMTS, selon l'ordre de réacheminement déterminé et la valeur de la tranche de temps, de la tranche de temps qui doit être occupée lorsque les données montantes envoyées par le CM connecté à la couche PHY CMTS sont réacheminées vers la couche MAC CMTS comprend :
la détermination, par la couche PHY CMTS, d'un intervalle de garde lorsque les données montantes envoyées par chaque CM sont réacheminées séparément vers la couche MAC CMTS ; et
la détermination, par la couche PHY CMTS, selon l'ordre de réacheminement déterminé, la valeur de la tranche de temps et l'intervalle de garde, de la tranche de temps qui est occupée lorsque les données montantes envoyées par le CM connecté à la couche PHY CMTS sont réacheminées vers la couche MAC CMTS.

4. Procédé selon la revendication 2, dans lequel les informations d'allocation de ressources montantes comprennent :
une ressource temps-fréquence occupée par les données montantes et un identificateur de profil utilisé par les données montantes.

5. Procédé selon la revendication 4, dans lequel la détermination, par la couche PHY CMTS, d'un ordre de réacheminement lorsque des données montantes envoyées par chaque CM sont réacheminées vers la couche MAC CMTS comprend :
la détermination, par la couche PHY CMTS, selon une ressource temps-fréquence occupée lorsque les données montantes envoyées par chaque CM sont réacheminées vers la couche MAC CMTS, de l'ordre de réacheminement lorsque les données montantes envoyées par chaque CM sont réacheminées vers la couche MAC CMTS.

6. Procédé selon la revendication 2 ou 3, dans lequel la détermination, par la couche PHY CMTS, d'un ordre de réacheminement lorsque des données montantes envoyées par chaque CM sont réacheminées vers la couche MAC CMTS comprend :
la détermination, par la couche PHY CMTS, selon un ordre dans lequel les informations d'allocation de ressources montantes configurées pour chaque CM sont reçues, de l'ordre de réacheminement lorsque les données montantes envoyées par chaque CM sont réacheminées vers la couche MAC CMTS.

7. Procédé selon la revendication 1, dans lequel la réception, par la couche PHY CMTS, des informations d'allocation de ressources montantes configurées par la couche MAC CMTS séparément pour chaque CM comprend :
la classification, par la couche PHY CMTS, de liaisons entre la couche PHY CMTS et la couche MAC CMTS en un canal de gestion et un canal de données à l'avance selon la tranche de temps ; et
la transmission, par la couche PHY CMTS, au moyen du canal de gestion, d'informations de gestion conformes à la norme "Data Over Cable Service Interface Specification", dite Docsis, comprenant les informations d'allocation de ressources montantes configurées par la couche MAC CMTS séparément pour chaque CM.

8. Procédé selon la revendication 7, le procédé comprenant en outre :
la transmission, par la couche PHY CMTS, d'informations de gestion relatives aux liaisons entre la couche PHY CMTS et la couche MAC CMTS au moyen du canal de gestion.

9. Appareil distant de couche physique de système de terminaison de modems câblés, dite couche PHY CMTS, l'appareil (1102) comprenant :
un module de détermination de tranche de temps (91), configuré pour déterminer, selon des informations d'allocation de ressources montantes configurées par une couche de commande d'accès au support de système de terminaison de modems câblés, dite couche MAC CMTS, séparément pour chaque modem câblé, dit CM, d'une pluralité de CM, une tranche de temps qui doit être occupée lorsque des données montantes envoyées depuis un CM connecté à la couche PHY CMTS sont réacheminées vers la couche MAC CMTS ; et
un module d'envoi (92), configuré pour réacheminer, vers la couche MAC CMTS sur la tranche de temps déterminée, les données montantes reçues qui sont envoyées, au moyen des informations d'allocation de ressources montantes configurées par la couche MAC CMTS, par le CM connecté à la couche PHY CMTS ;
dans lequel la couche PHY CMTS est configurée pour démoduler et décoder les données montantes reçues qui sont envoyées par le CM au moyen d'un câble coaxial, pour coder et moduler les données décodées afin de convertir un signal coaxial en un signal de fibre optique et pour envoyer le signal de fibre optique à la couche MAC CMTS.

10. Appareil (1102) selon la revendication 9, dans lequel le module de détermination de tranche de temps (91) comprend :
un module de détermination d'ordre (911), configuré pour déterminer un ordre de réacheminement lorsque des données montantes envoyées par chaque CM sont réacheminées vers la couche MAC CMTS ;
un module de détermination de volume de données (912), configuré pour déterminer, selon les informations d'allocation de ressources montantes configurées par la couche MAC CMTS pour chaque CM, un volume des données réacheminées lorsque les données montantes envoyées par chaque CM sont réacheminées vers la couche MAC CMTS;
un module de détermination de valeur de tranche de temps (913), configuré pour déterminer, selon le volume déterminé de données réacheminées, une valeur d'une tranche de temps qui est occupée séparément lorsque les données montantes envoyées par chaque CM sont réacheminées vers la couche MAC CMTS ; et
un module de mappage de tranche de temps (914), configuré pour déterminer, selon l'ordre de réacheminement déterminé et la valeur de la tranche de temps, la tranche de temps qui doit être occupée lorsque les données montantes envoyées par le CM connecté à la couche PHY CMTS sont réacheminées vers la couche MAC CMTS.

11. Appareil (1102) selon la revendication 10, dans lequel le module de mappage de tranche de temps (914) est plus particulièrement configuré pour :
déterminer un intervalle de garde lorsque les données montantes envoyées par chaque CM sont réacheminées séparément vers la couche MAC CMTS ; et
déterminer, selon l'ordre de réacheminement déterminé, la valeur de la tranche de temps et l'intervalle de garde, la tranche de temps qui est occupée lorsque les données montantes envoyées par le CM connecté à la couche PHY CMTS sont réacheminées vers la couche MAC CMTS.

12. Appareil (1102) selon la revendication 10, dans lequel le module de détermination de volume de données (912) est plus particulièrement configuré pour :
déterminer, selon une ressource temps-fréquence occupée par les données montantes configurée par la couche MAC CMTS pour chaque CM et un identificateur de profil utilisé par les données montantes, le volume de données réacheminées lorsque les données montantes envoyées par chaque CM sont réacheminées vers la couche MAC CMTS.

13. Appareil (1102) selon la revendication 12, dans lequel le module de détermination d'ordre (911) est plus particulièrement configuré pour :
déterminer, selon une ressource temps-fréquence qui est occupée lorsque les données montantes envoyées par chaque CM sont réacheminées vers la couche MAC CMTS, l'ordre de réacheminement lorsque les données montantes envoyées par chaque CM sont réacheminées vers la couche MAC CMTS.

14. Appareil (1102) selon la revendication 10 ou 11, dans lequel le module de détermination d'ordre (911) est plus particulièrement configuré pour :
déterminer, selon un ordre dans lequel les informations d'allocation de ressources montantes configurées pour chaque CM sont reçues, l'ordre de réacheminement lorsque les données montantes envoyées par chaque CM sont réacheminées vers la couche MAC CMTS.

15. Système de transmission de données, le système comprenant :
un appareil de couche de commande d'accès au support de système de terminaison de modems câblés, dite couche MAC CMTS, (1101), configuré pour configurer des informations d'allocation de ressources montantes relatives à chaque modem câblé, dit CM, d'une pluralité de CM, et envoyer les informations d'allocation de ressources montantes configurées pour chaque CM de la pluralité de CM à chaque appareil distant de couche physique de système de terminaison de modems câblés, dite couche PHY CMTS, (1102) ; et
l'appareil distant de couche PHY CMTS (1102), configuré pour déterminer, selon les informations d'allocation de ressources montantes configurées par l'appareil de couche MAC CMTS (1101) séparément pour chaque CM de la pluralité de CM, une tranche de temps qui doit être occupée lorsque des données montantes envoyées depuis un CM connecté à l'appareil de couche PHY CMTS (1102) sont réacheminées vers la couche MAC CMTS ; et réacheminer, vers la couche MAC CMTS sur la tranche de temps déterminée, les données montantes reçues qui sont envoyées, au moyen des informations d'allocation de ressources montantes configurées par la couche MAC CMTS, par le CM connecté à la couche PHY CMTS ;
dans lequel la couche PHY CMTS est configurée pour démoduler et décoder les données montantes reçues qui sont envoyées par le CM au moyen d'un câble coaxial, pour coder et moduler les données décodées afin de convertir un signal coaxial en un signal de fibre optique et pour envoyer le signal de fibre optique à la couche MAC CMTS.

16. Système selon la revendication 15, dans lequel, lorsque l'appareil de couche PHY CMTS (1102) est configuré pour déterminer, selon les informations d'allocation de ressources montantes configurées par l'appareil de couche MAC CMTS (1101) séparément pour chaque CM de la pluralité de CM, la tranche de temps qui doit être occupée lorsque les données montantes envoyées par le CM, connecté à l'appareil de couche PHY CMTS (1102), de la pluralité de CM sont réacheminées vers la couche MAC CMTS, l'appareil de couche PHY CMTS (1102) est plus particulièrement configuré pour :
déterminer un ordre de réacheminement lorsque des données montantes envoyées par chaque CM sont réacheminées vers la couche MAC CMTS ;
déterminer, selon les informations d'allocation de ressources montantes configurées par la couche MAC CMTS pour chaque CM, un volume des données réacheminées lorsque les données montantes envoyées par chaque CM sont réacheminées vers la couche MAC CMTS ;
déterminer, selon le volume déterminé de données réacheminées, une valeur d'une tranche de temps qui est occupée séparément lorsque les données montantes envoyées par chaque CM sont réacheminées vers la couche MAC CMTS ; et
déterminer, selon l'ordre de réacheminement déterminé et la valeur de la tranche de temps, la tranche de temps qui doit être occupée lorsque les données montantes envoyées par le CM connecté à la couche PHY CMTS sont réacheminées vers la couche MAC CMTS.
